# EUROPÄISCHE PATENTSCHRIFT

(11) **EP 1 695 867 B1**
(45) Veröffentlichungstag und Bekanntmachung des Hinweises auf die Patenterteilung: **03.03.2010**
(21) Anmeldenummer: 06001380.2
(22) Anmeldetag: 24.01.2006
(51) Int. Cl.: B60P 3/22, B65D 90/10, B65D 90/34

(54) **Deckel für den Dom eines ortsbeweglichen Kraftstofftanks**
Cover for the dome of a movable fuel tank
Couvercle pour le dôme d'un conteneur mobile de fuel

(30) Priorität: 25.02.2005 DE 202005003100 U
(43) Veröffentlichungstag der Anmeldung: 30.08.2006
(73) Patentinhaber: Saeta GmbH & Co. KG, 22880 Wedel (DE)
(72) Erfinder: Haar, Thomas, Dipl.-Ing., 25469 Halstenbek (DE)
(74) Vertreter: Hauck Patent- und Rechtsanwälte

(56) Entgegenhaltungen:
- EP-A- 1 443 000
- DE-A1- 4 131 003

## Beschreibung

Die Erfindung bezieht sich auf einen Deckel für den Dom eines ortsbeweglichen Kraftstofftanks nach dem Oberbegriff des Anspruchs 1. Die Erfindung bezieht sich insbesondere auf Tankkraftfahrzeuge bzw. Tankcontainer.

Ortsbewegliche Kraftstofftanks unterliegen beim Betrieb an Land bestimmten mit ADR bezeichneten Vorschriften. Werden derartige Kraftstofftanks auf See befördert, kommen andere Vorschriften zum Zuge entsprechend dem IMDG-Code (International Maritime Dangerous Goods Code). Aus Gründen der Feuersicherheit und Explosionsgefahr muss z.B. verhindert werden, daß über Öffnungen Kraftstoff bzw. Kraftstoffgase entweichen können. Wird daher ein Kraftstofftank von Land auf ein Schiff gebracht zum Transport über Wasser, dann ist es bisher Stand der Technik, daß eingebaute Armaturen, die gemäß der ADR betrieben werden und die sich normalerweise in einem Deckel im Dom des Kraftstofftanks befinden, ausgebaut und die Öffnungen in einen Zustand gebracht werden, daß den Sicherheitsvorschriften auf See Rechnung getragen ist. Der Umbau ist aufwändig und birgt die Gefahr, daß bei einem Rückbau, der ebenfalls aufwändig ist, nicht mehr alle Teile für einen ordnungs- und bestimmungsgemäßen Betrieb zur Verfügung stehen. Außerdem besteht die Gefahr, daß beim Rückbau fehlerhaft vorgegangen wird, wodurch der Betrieb des Tanks nicht mehr ordnungsgemäß gewährleistet ist. Auch die Sicherheit kann durch fehlerhaften Rückbau beeinträchtigt werden. Ist der Rückbau nicht vorschriftsmäßig vorgenommen und fehlt es an einer Öffnung im Domdeckel, kann geschehen, daß der Tank beim Absaugen von Kraftstoff kollabiert. Dadurch wird der gesamte Tank unbrauchbar.

Aus EP 1443000 ist ein gattungsbildender Deckel bekannt, der am Dom eines Kraftstofftanks angeschraubt ist. Er weist eine verschließbare Einfüllöffnung auf, die beispielsweise einen Deckel im Deckel beinhaltet. Der Deckel enthält ein Überdruckventil, das dafür sorgt, daß bei ansonsten verschlossenen Öffnungen im Deckel bei einem bestimmten Überdruck im Tank eine Entlastung stattfindet. Es ist ferner ein Gaspendelventil vorgesehen, über das eine Verbindung mit einem anderen Tank stattfindet, zu dem hin oder von diesem fort ein Kraftstofftransport stattfindet. Die Verbindung ermöglicht den Ausgleich des Gases beim Leeren bzw. Befüllen der Tanks. Das Gaspendelventil, das üblicherweise pneumatisch geöffnet wird, weist auf der Tankinnenseite einen Stutzen auf, der mittels einer separaten lösbar anbringbaren Verschlußkappe dicht verschließbar ist. Ein Ausbau ist nicht notwendig. Außerdem ist im Tank, in der Nähe des Deckels, ein Parkmittel vorgesehen zur sicheren Aufnahme der Verschlußkappe. Wird daher eine Umrüstung von ADR- zum IMDG-Betrieb notwendig, dann wird mit Hilfe der Verschlußkappe das Gaspendelventil gesperrt. Vorher befand sich das erste Verschlußelement in der sicheren Parkposition, aus der es von einer Bedienungsperson ohne weiteres entnommen und auf den Stutzen gebracht werden kann.

Der bekannte Deckel weist auch ein Druckentlastungsventil auf. Es öffnet in beiden Richtungen, d.h. bei einem Über- und einem Unterdruck im Tank stellt es eine Verbindung mit Atmosphäre her. Es ist ein zweites Verschlußelement vorgesehen, das in zwei unterschiedlichen Positionen am Stutzen des Druckentlastungsventils anbringbar ist. In der einen Position wird eine Verbindung des Stutzens mit Atmosphäre hergestellt und in der anderen der Stutzen dicht abgeschlossen. Bei der Umrüstung von dem einen zum anderen Betrieb braucht die Bedienungsperson daher nur das zweite Verschlußelement zu lösen und es in der anderen Position wieder anzubringen. Ein Ausbau ist nicht notwendig.

Schließlich ist beim bekannten Deckel ein für den Seebetrieb vorgeschriebenes Vakuumventil vorgesehen, das die Aufgabe hat, bei einem Unterdruck im Tank einen Ausgleich herzustellen. Selbst wenn bei der Umrüstung vom IMDG auf den ADR-Betrieb vergessen werden sollte, die Verschlußkappe zu entfernen bzw. umzukehren, würde der Tank beim Leeren nicht kollabieren, weil das Vakuumventil ausreicht, den Tank ausreichend zu belüften, wenn ein Unterdruck aufgebaut wird.

Die Vorteile, die mit dem bekannten Deckel erreicht werden, sind groß. Es können keine Teile verloren gehen. Die Umrüstung von dem einen in den anderen Betrieb ist praktisch fehlersicher. Selbst wenn diese Umrüstung vergessen werden sollte, können Beein-trächtigungen nicht zu Schäden führen. Da ein Entfernen von Sicherheitsarmaturen nicht notwendig ist, kann keine Beeinträchtigung der Sicherheit beim Wiedereinbau der Armaturen erfolgen.

Der Erfindung liegt die Aufgabe zugrunde, bei einem Deckel der eingangs genannten Art den Aufwand für das Gaspendelventil zu verringern.

Diese Aufgabe wird durch die Merkmale des Anspruchs 1 gelöst.

Bei der Erfindung sind der Ventilkörper, der Ventilkolben und das Ventilglied des Gaspendelventils sowie die Befestigungsschrauben bzw-bolzen zur Anbringung des Ventilkörpers am Deckel aus Edelstahl geformt. Das Ventilglied und die Ventilfeder sind ferner so ausgelegt, daß das Ventilglied in die Öffnungsstellung verstellt wird, wenn ein vorgegebener Unterdruck im Tank herrscht.

Es wurde erkannt, daß eine Verschlußkappe für das Pendelventil entfallen kann, wenn die Ventilteile aus Edelstahl gefertigt werden. Diese Teile sind bei einem Feuer widerstandsfähig und halten den Belastungen viel länger stand, als dies bei herkömmlichen Ventilbauteilen der Fall ist. Dadurch, daß bei Unterdruck das Ventilglied öffnet, kann ein separates Vakuumventil, das beim bekannten Deckel obligatorisch ist und separat gefertigt und eingebaut werden muß, in Fortfall kommen. Daher ist ein Deckel nach der Erfindung mit deutlich geringerem Aufwand herstellbar als dies beim bekannten Deckel der Fall ist. Auch der bei der Umrüstung erforderliche Aufwand des Auf- bzw. Abschraubens der Verschlußkappe beim bekannten Deckel und das Verwahrens in der Parkposition, ist in Fortfall gekommen.

Bei der Erfindung kann der Ventilkörper einen umlaufenden radialen Flansch haben, der einteilig mit dem Ventilgehäuse gefertigt ist und der mit dem Deckel verschraubt wird. Dies kann nach einer Ausgestaltung der Erfindung dadurch geschehen, daß die Löcher im Flansch ein Gewinde aufweisen, und Schraubenbolzen von der Unterseite des Deckels in die Gewindeöffnungen eingeschraubt werden zwecks Befestigung des Ventilkörpers am Deckel.

Während bei dem bekannten Deckel der Schlauchanschluß für das Gaspendelverfahren und Ventilgehäuse einteilig geformt sind, ist nach einer Ausgestaltung der Erfindung ein separates Schlauchanschlußgehäuse vorgesehen, das oberhalb des Ventilkörpers mit dem radialen Flansch durch Schraubverbindungen verbunden werden kann.

Eine besonders einfache Konstruktion besteht in einer Ausgestaltung der Erfindung darin, daß der Ventilkörper einen in den Tank hineinragenden Stutzen aufweist, an dessen unterem Ende ein Sitz für das Ventilglied ausgebildet ist. Das auf diese Weise gebildete Gaspendelventil weist im Verhältnis zur Öffnung im Deckel einen maximalen Durchströmquerschnitt auf.

Die Erfindung wird nachfolgend anhand eines in Zeichnungen dargestellten Ausfüh-rungsbeispiels näher erläutert.
- Fig. 1: zeigt die Draufsicht auf einen Deckel nach der Erfindung.
- Fig. 2: zeigt die Draufsicht auf ein Gaspendelventil des Deckels nach Fig. 1.
- Fig. 3: zeigt einen Schnitt durch die Darstellung nach Fig. 2 entlang der Linie 3-3.

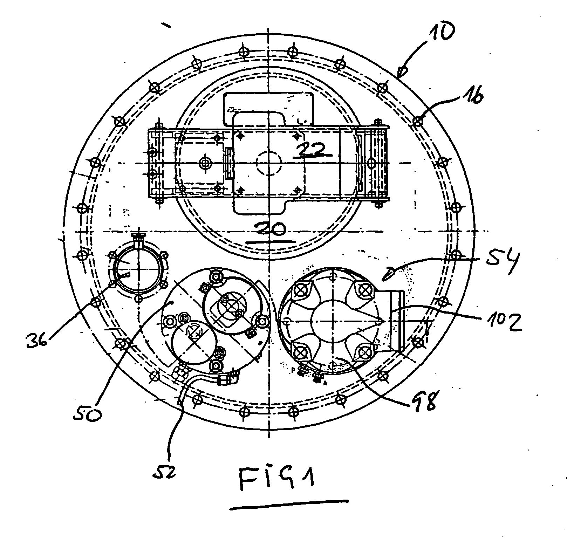

In Fig. 1 ist ein Deckel 10 für den Verschluß eines Doms eines sonst nicht dargestellten Kraftstofftanks gezeigt. Der Deckel 10 ist mit einer Reihe von Schrauben 16 am Dom angeschraubt. Der Deckel 10 weist eine außermittige Öffnung auf, welche durch einen weiteren Deckel 20 dichtend verschließbar ist. Zu Verschlußzwecken ist zur Verriegelung auf dem Deckel 10 eine Hebelanordnung 22 angelenkt. Am Deckel 20 ist ein Überdruckventil angeordnet. Weitere Einzelheiten insoweit ergeben sich aus EP 1443000.

Bei 36 ist in Fig. 1 ein Verschlußelement zu erkennen. An der Unterseite des Deckels 10 ist hier ein Entlastungsventil angebracht, das im Einzelnen nicht beschrieben werden soll. Es ist von bekanntem Aufbau und bekannter Wirkungsweise. Über die Öffnungen kann Luft in den Tank eintreten oder aus dem Tank entweichen, je nach den im Tank herrschenden Druckverhältnissen. Wahlweise kann jegliche Verbindung zwischen Atmosphäre und Tank gesperrt werden.

In Fig. 1 ist mit 50 eine Kappe aus Edelstahl bezeichnet, die auf den Deckel 10 auf-geschraubt ist und welche gleichzeitig Gehäuse eines Füllstandssensor bzw. eines Überfüllsensors ist. Der nicht gezeigte Überfüllsensor ist durch die Kappe 50 gegenüber äußeren Einwirkungen gesichert. Mit 52 ist eine Leitung angedeutet, die mit dem Überfüllsensor in Verbindung steht.

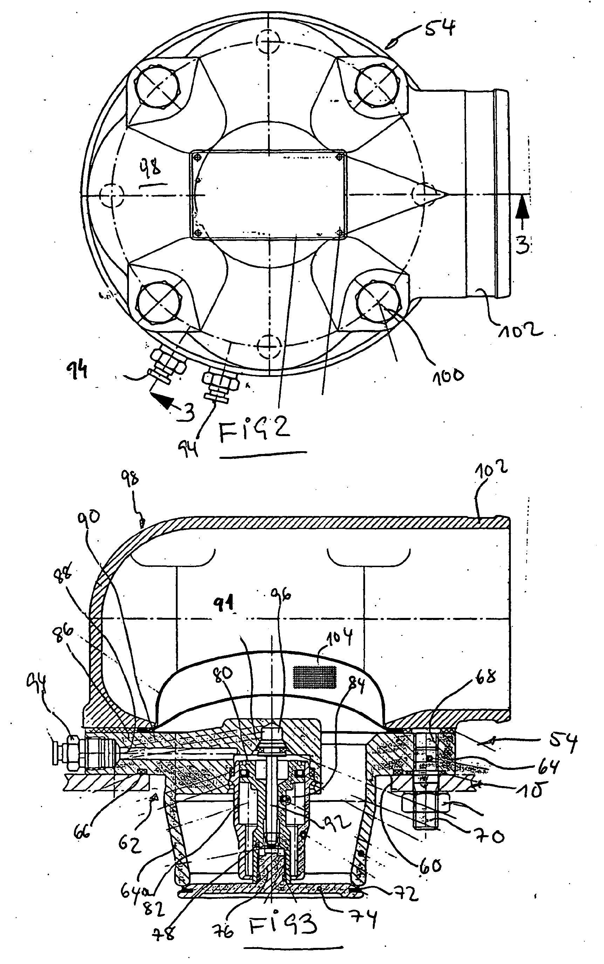

Auf dem Deckel 10 ist ferner eine Gaspendelventilanordnung 54 angeordnet, die näher in den Figuren 2 und 3 dargestellt ist.

In Fig. 3 ist der Deckel 10 im Schnitt angedeutet. Er weist eine Kreisöffnung 60 auf. Sie nimmt einen Ventilkörper 62 auf, der mit einem Stutzen 64a in den Tank hineinsteht. Der Ventilkörper 62 hat einen umlaufenden ringförmigen Flansch 64, der über eine Dichtung 66 auf der Oberseite des Deckels 10 aufliegt. Im Umfangsabstand sind mehrere Gewindebohrungen 68 im Flansch 64 geformt, in die Gewindebolzen 70 hineingeschraubt werden, welche durch Öffnungen im Deckel 10 hindurchgeführt sind. Auf der Unterseite des Deckels 10 wird eine Mutter auf die Gewindebolzen 70 geschraubt, um den Flansch 64 gegen Oberseite des Deckels 10 anzupressen.

Das untere Ende des Stutzen 64a bildet einen Ventilsitz für eine umlaufende Dichtung 72 in einem Ventilteller bzw. Ventilglied 74. Der Ventilteller sitzt mit einem axialen Bund 76 abgedichtet in einem Bohrungsabschnitt eines Kolbens 78, der im Querschnitt annähernd X-förmig gestaltet ist. Ein oberer Kolbenabschnitt 80 wirkt dichtend mit einem Zylinder 82 zusammen, in dem eine Rückstellfeder 84 angeordnet ist, die am Kolbenabschnitt 80 an der Unterseite anliegt und mit dem anderen Ende an einem Bodenabschnitt des Zylinders 82 abgestützt ist. Dadurch ist der Ventilteller 74 in die Schließstellung vorgespannt. Über einen radialen Abschnitt 86 des Flansches 64 sind zwei Bohrungen 88, 90 geführt (letztere) gestrichelt gezeichnet. Die radialen Bohrungen sind über äußere Anschlüsse 94 mit Verbindungsleitungen verbunden. Einer der Anschlüsse 94 führt zu einer Druckluftquelle, über welche Druckluft in den Zylinderraum oberhalb des Kolbenabschnitts 80 geführt wird zwecks Verstellung des Kolbens 78 und damit des Ventiltellers 74 nach unten in die Öffnungsstellung des Gaspendelventils.

Innerhalb des Kolbens 78 ist ein Stift 92 begrenzt gleitend beweglich. Ab einem gewissen Stellweg des Ventiltellers 74 wird der Stift 92 nach unten mitgenommen und hebt damit ein Ventilglied 91 von seinem konischen Ventilsitz, wodurch der Zylinderraum oberhalb des Kolbenabschnitts 80 mit einem Raum 96 in Verbindung tritt, der seinerseits mit der Querbohrung 90 in Verbindung steht. Der Anschluß 94 der Bohrung 90 führt zu dem Gaspendelventil der benachbarten Kammer eines Tanks. Dadurch soll sichergestellt sein, daß bei dem Öffnen des Gaspendelventils nach Fig. 3 auch alle anderen Gaspendelventile der anderen Kammern des Tanks geöffnet werden, was die behördliche Vorschrift ist.

Ventilkörper 62, Ventilteller 74, Zylinder 82, Kolben 78, Bolzen 70 und Mutter sind aus Edelstahl gefertigt. Sie können daher bei Hitze aufgrund von Feuer oder dergleichen das Gaspendelventil über einen vorgegebenen Zeitraum in Betrieb halten. Ventilteller 74, Kolben 78 und Feder 84 sind derart ausgebildet, daß der Ventilteller 74 bei einem vorgegebenen Unterdruck im Tank automatisch öffnet. Ein separates Vakuumventil ist nicht erforderlich.

Ein Anschlußgehäuse 98 ist mittels Schraubverbindungen 100 auf der Oberseite des Flansches 64 des Ventilkörpers befestigt. Es weist einen seitlichen Abgang 102 auf zur Verbindung mit einem Gaspendelschlauch. Oberhalb des Gaspendelventils ist im Anschlußgehäuse 98 ein Sieb 104 angeordnet.

## Patentansprüche

1. Deckel (10) für den Dom eines ortsbeweglichen Kraftstofftanks mit einer verschließbaren Einfüllöffnung, einem Überdruckventil, einem Druckentlastungsventil, und einem Gaspendelventil (54), das einen Ventilkörper (62), einen Ventilkolben (78) und ein Ventilglied (74) aufweist, wobei das Ventilglied durch eine Ventilfeder in Schließstellung vorgespannt ist, und wobei das Ventilglied (74) mittels des mit einem Fluiddruck beaufschlagten Ventilkolbens (78) geöffnet werden kann, **dadurch gekennzeichnet, daß** der Ventilkörper (62), der Ventilkolben (78) und das Ventilglied (74) des Gaspendelventils (54) und die Befestigungsschrauben bzw.-bolzen (70) zur Anbringung des Ventilkörpers (62) am Deckel (10) aus Edelstahl geformt sind, und daß zur Bildung eines Vakuumventils das Ventilglied (74) und die Ventilfeder (84) so ausgelegt sind, daß das Ventilglied (74) in die Öffnungsstellung verstellt wird, wenn ein vorgegebener Unterdruck im Tank herrscht.

2. Deckel nach Anspruch 1, **dadurch gekennzeichnet, daß** am Ventilkörper (62) ein umlaufender radialer Flansch (64) angeformt ist, der Gewindelöcher (68) aufweist, in die von der Unterseite des Deckels (10) jeweils ein Schraubenbolzen (70) eingeschraubt ist.

3. Deckel nach Anspruch 2, **dadurch gekennzeichnet, daß** ein Schlauchanschlußgehäuse (98) oberhalb des Ventilkörpers (62) mit dem radialen Flansch (64) durch mehrere Schraubverbindungen (100) verbunden ist.

4. Deckel nach einem der Ansprüche 1 bis 3, **dadurch gekennzeichnet, daß** der Ventilkörper (62) einen in den Tank hineinragenden Stutzen (64a) aufweist, an dessen unterem Ende ein Sitz für das Ventilglied (74) ausgebildet ist.

## Claims

1. Cover (10) for the dome of a movable fuel tank, with a locking filling hole, a pressure control valve, a decompression valve and a gas shuttle valve (54) that features a valve body (62), a valve piston (78) and a valve component (74), wherein the valve component is biased into the locking position by a valve spring and wherein the valve component (74) can be opened by means of the valve piston (78) that is pressurised by a fluid, **characterised in that** the valve body (62), the valve piston (78) and the valve component (74) of the gas shuttle valve (54) and the fastening screws or fastening bolts (70), respectively, for mounting the valve body (62) on the cover (10) are formed from stainless steel, and that in order to form a vacuum valve, the valve component (74) and the valve spring (84) are realised such that the valve component (74) is shifted into the opening position when there is a preset negative pressure in the tank.

2. Cover according to claim 1, **characterised in that** a revolving radial flange (64) is formed on the valve component (62) which has threaded holes (68) into each of which one screw bolt (70) at a time is screwed in from out the lower side of the cover (10).

3. Cover according to claim 2, **characterised in that** a hose connection case (98) above the valve body (62) is connected to the radial flange by several screw joints (100).

4. Cover according to any one of claims 1 to 3, **characterised in that** the valve body (62) has a connection piece (64a) reaching out into the tank, on the lower end of which a seat is formed for the valve component (74).

## Revendications

1. Couvercle (10) pour le dôme d'un conteneur mobile de fuel, avec un orifice de remplissage verrouillable, une valve de décharge, une valve de réduction de pression et une valve de gaz à clapet oscillant (54) qui a un corps de valve (62), un piston de valve (78) et un organe de valve (74), l'organe de valve étant précontrait vers la position de fermeture par un ressort de valve, et dans laquelle l'organe de valve (74) peut être ouvert au travers du piston de valve (78) qui est pressurisé par un fluide, **caractérisé en ce que** le corps de valve (62), le piston de valve (78) et l'organe de valve (74) de la valve de gaz à clapet oscillant (54) et les vis ou respectivement boulons de fixation (70) pour monter le corps de valve (62) dans le couvercle (10) sont formés d'acier inox, et que pour former une valve de vide, l'organe de valve (74) et le ressort de valve (84) sont dimensionnés tellement que l'organe de valve (74) est mis en la position d'ouverture quand il y a une pression négative donnée dans le conteneur.

2. Couvercle selon la revendication 1, **caractérisé en ce que** une bride radiale circonférentielle (64) est formée dans le corps de valve (62), qui présente des trous taraudés (68) dans chacun desquels un boulon fileté (70) est vissé à partir du côté inférieur du couvercle (10).

3. Couvercle selon la revendication 2, **caractérisé en ce que** une boîte de raccord de tuyau (98) est reliée avec la bride radiale (64) au-dessus du corps de valve (62) par plusieurs raccords à vis (100).

4. Couvercle selon l'une quelconque des revendications 1 à 3, **caractérisé en ce que** le corps de valve (62) présente un ajoutoir (64a) s'étendant dans l'intérieur du conteneur, dans l'extrémité inférieure duquel est formé un siège pour l'organe de valve (74).
